# EUROPEAN PATENT SPECIFICATION

(11) **EP 2 921 469 B1**
(45) Date of publication and mention of the grant of the patent: **30.01.2019**
(21) Application number: 15158469.5
(22) Date of filing: 10.03.2015
(51) Int. Cl.: H05B 3/14, C04B 35/58, C04B 35/638, C04B 35/632

(54) **MOLYBDENUM DISILICIDE HEATING ELEMENT WHICH CONTAINS TUNGSTEN**
WOLFRAM ENTHALTENDES MOLYBDÄN-DISILIZID HEIZELEMENT
ELEMENT DE CHAUFFAGE EN MOLYBDÈNE DISILICIDE CONTENANT DU TUNGSTÈNE

(30) Priority: 20.03.2014 JP 2015057820; 23.02.2015 JP 2015032749
(43) Date of publication of application: 23.09.2015
(73) Proprietor: JX Nippon Mining & Metals Corporation, Tokyo 100-8164 (JP)
(72) Inventor: Takamura, Hirosh, Chiyoda-ku, Tokyo 100-8164 (JP); Narita, Satoyasu, Chiyoda-ku, Tokyo 100-8164 (JP)
(74) Representative: Hoarton, Lloyd Douglas Charles

(56) References cited:
- CN-A- 1 865 191
- CN-A- 101 531 524
- JP-A- 2009 266 396
- US-A1- 2005 184 058

## Description

### TECHNICAL FIELD

The present invention relates to a tungsten-containing molybdenum disilicide heater that can be used at a temperature higher than a conventional molybdenum disilicide heater.

### BACKGROUND ART

A heating element which has molybdenum disilicide (MoSi₂) as a main component, for having its excellent oxidation resistance characteristic, has been commercially available since around the 1950s to 1960s, especially as a ultra-high-temperature heating element used in the atmosphere or in an oxidizing atmosphere, and is being used in wide applications. In general, those heating elements contain MoSi₂ in an amount of 70 wt. % or more as the main component.

Conventionally, in a heating element used in a large number of fields such as the glass industry and ceramics firing, a heating portion (the "heating portion" commonly means a portion that mainly generates heat when energized and that is a part of the heating element having a small diameter other than a terminal portion) is formed in the shape of a letter U (2 shank-type), and is attached to be suspended from the ceiling or the side wall of a furnace, and the maximum use temperature of the furnace reaches 1700 to 1800°C. The present invention relates to a heater that can be used at a higher temperature by improving the component composition of a molybdenum disilicide heater which is a center portion of such a heater.

As a conventionally known molybdenum disilicide heater, Cited Document 1 (D1) below discloses a molybdenum silicide-type electrical resistance element which includes at least one high-temperature belt and at least two lead-in conductors, and the high-temperature belt contains a uniform silicide material that contains molybdenum and tungsten and is represented by a chemical formula MOₓW₁₋ₓSi₂ where x is 0.5 to 0.75. In the electrical resistance element, 10 to 40% of the total weight is replaced with at least one type of compound: molybdenum boride or tungsten boride, and the compound is present in the shape of grains in the silicide material.

As the molybdenum boride, at least one or more types of MoB, Mo₂B, MoB₂ and Mo₂B₅ are disclosed, and as the tungsten boride, at least one or more types of WB, W₂B, WB₂ and W₂B₅ are disclosed.

Cited Document 2 (D2) discloses a tungsten solid solution-type molybdenum disilicide composite ceramics obtained by combining 5 to 40 volume % of a second phase consisting of one or more types of compounds whose average grain diameter is 5 µm or less and which are selected from Si₃N₄, TiC, ZrC, HfC, TiB, TiB₂, ZrB₂, HfB₂, ZrO₂, HfO₂, SiC, MoB, Mo₂B, MoB₂, Mo₂B₅, WB, W₂B, WB₂ and W₂B₅ with a solid solution matrix in which part of Mo in MoSi₂ is replaced with W and which is represented by a general formula (Mo₁₋ₓWₓ) Si₂.

Generally, while a molybdenum disilicide heater operated at 1800°C or less uses MoSi₂ as a main raw material, for the heater of 1800° C or more as disclosed in D1 and D2, it is described that adding tungsten, which is a high melting point metal, is useful.

### CITATION LIST

### [Patent Document]

Patent Document 1: Japanese Unexamined Patent Application Publication No.H08-288103
Patent Document 2: Japanese Unexamined Patent Application Publication No.H09-132460 US2005184058, CN101531524 and CN1865191 disclose a method of making a heating element of molybdenum silicide type.

### SUMMARY OF INVENTION

### [Technical Problem]

The present invention provides a tungsten-containing molybdenum disilicide heater that has an excellent oxidation resistance characteristic and a low evaporation rate and that can be used at much higher a temperature as compared with a conventional molybdenum disilicide heater.

### [Solution to Problem]

As a result of intensive study to solve the above problem, the present inventors have discovered that a tungsten-containing molybdenum disilicide heater can be used at a higher temperature by adding a yttrium oxide to the tungsten-containing molybdenum disilicide heater.

Based on the foregoing findings, the present invention provides a tungsten molybdenum disilicide heater and methods for producing the same as claimed.

### [Effects of Invention]

The present invention has an excellent effect of providing a tungsten-containing molybdenum disilicide heater that has an excellent oxidation resistance characteristic and a low evaporation rate and that can be used at a temperature higher than the conventional molybdenum disilicide heater.

### BRIEF DESCRIPTION OF DRAWINGS

Fig. 1 is a diagram showing the outline of a manufacturing process.
Fig. 2 is a phase diagram of Y₂O₃ - SiO₂.
Fig. 3 is a diagram showing a relationship between a molar ratio of Y₂O₃ to SiO₂ and a relative temperature.

### DESCRIPTION OF EMBODIMENTS

The present invention is a heater that has, as a basic composition, a tungsten-containing molybdenum disilicide (MoₓW₁₋ₓ) Si₂, wherein x = 0.6 to 0.7. The ratio (x) between Mo and W is set at 0.6 to 0.7 as described above because this is a basic component composition for the life of a heater at a high temperature.
In the present invention, Y₂O₃ at 8 to 12 vol. % as an additive is further contained. This is a heater that is obtained by further adding the above component to the component composition formed of the tungsten-containing molybdenum disilicide (MoₓW₁₋ₓ) Si₂. Since the same is applied hereinafter, this description will be omitted.

The present invention also provides a heater in which, although the basic component is the tungsten-containing molybdenum disilicide (MoₓW₁₋ₓ) Si₂, wherein x = 0.6 to 0.7 as in the above description, a mixture of Y₂O₃ and SiO₂ at 8 to 12 vol. % as an additive is further contained. In this case, the ratio of SiO₂ in the additive described above is set at 65 mol % or less.

Since Y₂O₃ is an expensive material; it is possible to reduce the amount of Y₂O₃ used by adding SiO₂ simultaneously. However, when the amount of SiO₂ added is excessively increased, the characteristic of heat resistance that a heater possess is lowered, thus the ratio is set at 65 mol % or less, as described above. With consideration given to the maintenance of the characteristic of the heater and the production cost, it can be said that a more effective range of Y₂O₃ / (Y₂O₃ + SiO₂) is from 40 to 60 mol %.

Furthermore, the present invention also provides a heater in which the tungsten-containing molybdenum disilicide (MoₓW₁₋ₓ) Si₂, wherein x = 0.6 to 0.7 is used. As an additive, Y₂SiO₅ at 8 to 12 vol. % can be further contained. As an additive of Y₂SiO₅, Y₂SiO₅ powder obtained by mixing Y₂O₃ powder and SiO₂ powder using Y₂O₃ / (Y₂O₃ + SiO₂) = 40 to 60 mol % and heating and synthesizing thereof in the atmosphere at 1650°C or more can be used.
Although as a stoichiometric ratio, Y₂SiO₅ is a case where mixing is performed using Y₂O₃ / (Y₂O₃ + SiO₂) = 50 mol %, it is expected from a state diagram that the Y₂SiO₅ phase is mostly obtained even when mixing is performed using Y₂O₃ / (Y₂O₃ + SiO₂) = 40 to 60 mol %.
The same effect can be obtained within the range, thus hereinafter in the present invention, the powder after synthesis is represented as Y₂SiO₅ powder.

Since (MoₓW₁₋ₓ) Si₂, which is the basic composition of the present invention, can be a solid solution obtained by replacing part of Mo in MoSi₂ with W, whether Mo or W and Si are contained can be estimated by X-ray analysis on a mother phase with an EDX device (device using energy dispersive X-ray spectroscopy) and the like incorporated in a scanning electron microscope (Maker: Hitachi High-Technologies Corporation, device name: S-3000N). However, estimating the composition is not possible since the signals of Mo and W overlap.

It is possible to analyze a manufactured sintered compact by using ICP-OES, and to confirm and identify the content of each element. It is possible to estimate x in the composition formula from the amounts of Mo and W measured.

When Y₂O₃ is further added, the presence of Y₂O₃ can be confirmed with the EDX device (device using energy dispersive X-ray spectroscopy) that is attached to the scanning electron microscope (Maker: Hitachi High-Technologies Corporation, device name: S-3000N). However, it is extremely difficult to measure the content of Y₂O₃ itself. This is because Y₂O₃ may be present as an oxide of a different valence, and cannot be determined uniformly. Thus, at present, it is possible to confirm the content of Y₂O₃ from the content of Y measured, of which method is simple and easy.

When Y₂SiO₅ is added, it is likewise possible to confirm the presence of an oxide including Y and Si and an approximate composition ratio thereof by using the EDX device. However, it is difficult to measure the amount thereof. Hence, the amount of conversion of Y₂SiO₅ is calculated from the content of Y measured with ICP-OES, and thus it is possible to confirm the added amount.

As described above, the presence of the additive can be confirmed with a scanning electron microscope or the like; and by measuring Mo, W and Y with ICP-OES, it is possible to confirm the basic composition and the amount of each element added. However, it is not possible to measure Si with ICP-OES because it is removed in pretreatment of a sample.

As described above, with respect to a yttrium oxide, it is possible to estimate its content by analyzing yttrium, and it is found that 4.3 to 6.6 wt. % is contained as an analytical value. However, since it is difficult to analyze silicon, whether it is present as one or more types of forms of silicon oxide and yttrium silicate is only estimated from the added amount.

In order to confirm the effects of the present invention, the following tests were performed.

Though generally, as various types of oxides of additives, it is required that the melting point is high (1900°C or more) and that the thermal expansion coefficient is close to that of MoSi₂, considering the above, as an additive for oxidation resistance and resistance value control, not only SiO₂ alone which is a constituent material of a heater generally used at 1800°C or less, but also the materials of oxides shown in table 1 were prepared.

**[Table 1]**

| Material | Melting point (°C) | Thermal expansion coefficient (1/K) |
|---|---|---|
| Al₂O₃ | 2015 | 7.20E-06 |
| HfO₂ | 2810 | 3.80E-06 |
| LaB₆ | 2530 | |
| Y₂0₃ | 2410 | 7.30E-06 |
| ZrO₂ | 2677 | 9.20E-06 |

The following five types of materials were selected: Al₂O₃, HfO₂, LaB₆, Y₂O₃ and ZrO₂. Here, these various types of oxides alone or the mixtures of SiO₂ and these various types of oxides were used. Al₂O₃ has a melting point of 2015°C and a thermal expansion coefficient of 7.20 × 10⁻⁶ 1/K, HfO₂ has a melting point of 2810°C and a thermal expansion coefficient of 3.80 × 10⁻⁶ 1/K. The thermal expansion coefficient is not shown with LaB₆ because of the problem present which is described later. Y₂O₃ has a melting point of 2410°C and a thermal expansion coefficient of 7.30 × 10⁻⁶ 1/K; and ZrO₂ has a melting point of 2677°C and a thermal expansion coefficient of 9.20 × 10⁻⁶ 1/K,

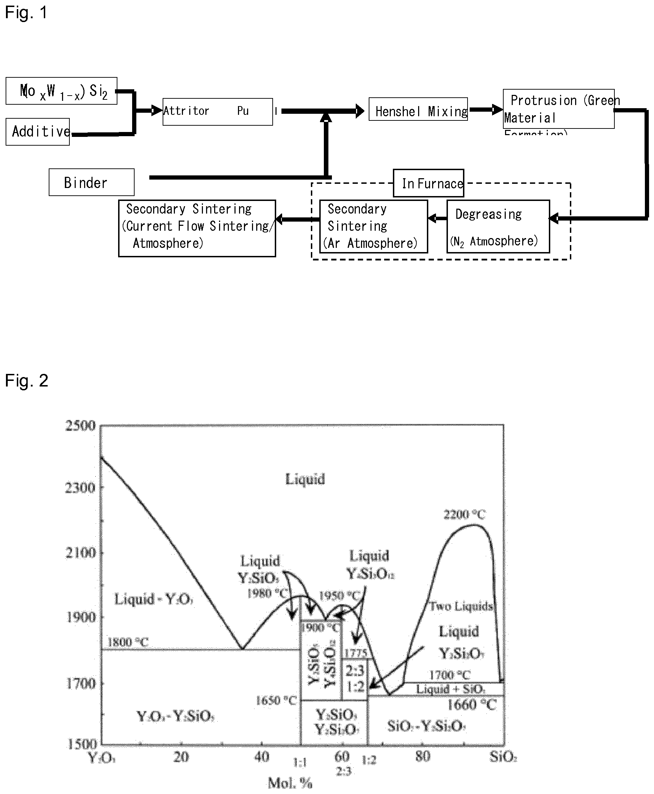

In the tests, x in (MoₓW₁₋ₓ) Si₂ was set at 0.65. The outline of a manufacturing process is shown in Fig. 1. The tungsten-containing molybdenum disilicide (MoₓW₁₋ₓ) Si₂ as a main raw material was prepared, mixed with the additive and subjected to pulverization with an attritor to have the grain diameter being 1 to 3 µm. The amount of additive was set at 8 to 12 vol. % so as to correspond to the electrical characteristics of a MoSi₂-type heater (hereinafter described as a "conventional heater") used at 1800°C or less. When the grain diameter of the raw material before pulverization is 1 to 3 µm, the step can be omitted.

Further, a binder was added to the obtained mixture, Henschel mixing was performed thereto. The mixture was shaped into a rod which becomes a shape of an original heater, 3 mm to 12 mm in diameter by using an extruder so as to obtain a green material. Subsequently, degreasing in an atmosphere of N₂ was performed inside a heating furnace, and primary sintering in an atmosphere of Ar at 1450 to 1550°C or more thereafter was performed. The material was removed from the furnace, thereafter secondary sintering, which is current flow sintering in the atmosphere, was performed to produce a heater.
This step is the same as in the manufacturing process described below. Since these are exemplary, other manufacturing processes may be adopted so as long as the same heater can be produced.

The characteristics were evaluated by measuring the maximum temperature. With the maximum temperature, a surface temperature was measured at a time when a current flow was applied to the sintered compact. However, since the absolute value of the surface temperature is affected by the open air, it was performed by relative comparison with a "conventional heater."

The results of the tests that were performed in the steps described above are shown in table 2. In the case of the additive of SiO₂ in test No. 1 in table 2, the maximum (MAX) temperature was 1750°C (this is determined as a reference temperature). For the maximum temperature of SiO₂ in test No. 2, the temperature increased with respect to the reference temperature by 6°C, for the maximum temperature of Al₂O₃ in test No. 3, the temperature increased with respect to the reference temperature by 4°C and for the maximum temperature of HfO₂ in test No. 4, the temperature was decreased by 4°C with respect to the reference temperature. These results were substantially the same temperatures as in a normal heater. In test No. 5 for LaB₆, a large amount of smoke generated when a current was applied, thus evaluation was not possible.

**[Table 2]**

| Test Number | Mo composition x (MoxW1-x) Si₂ | Additives | MAX temperature |
|---|---|---|---|
| 1 | 1 | SiO₂ | Reference |
| 2 | 0.65 | SiO₂ | 6 |
| 3 | 0.65 | Al₂O₃ | 4 |
| 4 | 0.65 | HfO₂ | -4 |
| 5 | 0.65 | LaB₆ | - |
| 6 | 0.65 | Y₂O₃ | 26 |
| 7 | 0.65 | Y₂O₃ + 55mol%SiO₂ | 25 |
| 8 | 0.65 | ZrO₂ + 3mol%Y₂O₃ | -35 |
| 9 | 0.65 | ZrO₂ + 20mol%Y₂O₃ | 23 |

With Y₂O₃ in test No. 6, on the other hand, the maximum temperature increased with respect to the reference temperature by 26°C, which was effective. It was also found that using not Y₂O₃ alone but a mixture with SiO₂ in test No. 7, "Y₂O₃ + 55 mol % of SiO₂" was effective.

Since ZrO₂ undergoes phase transition, ZrO₂ at 100 % is not easy to use. Thus, ZrO₂ to which 3 mol % or 20 mol % of Y₂O₃ was added was used, and it was observed that addition of Y₂O₃ at 3 mol % was ineffective but at 20 mol % was effective.
However, as for the material in that Y₂O₃ at 20 mol % was added to ZrO₂, there was a problem that the sintered compact was "chipped" by the increased temperature, and thus, it was considered inappropriate. As a result, the additive of Y₂O₃ and ZrO₂ is considered to be inappropriate.

As described above, the additive of Y₂O₃ alone was effective. However, since Y₂O₃ is expensive, it is found that it is optimum to reduce the used amount by adding SiO₂.
Hence, the dependence on the composition ratio of Y₂O₃ / SiO₂ was examined. The results thereof are shown in table 3. In the table, though the description of "Y₂O₃ + XX mol % SiO₂" is described, it is a simple form of (100 - XX) Y₂O₃: XX mol % SiO₂

As described above, with "Y₂O₃ + 55 mol % SiO₂" in test No. 7, the maximum temperature increased with respect to the reference temperature (1750°C) by 25°C, and with "Y₂O₃ + 65 mol % SiO₂" in test No. 10, the maximum temperature increased with respect to the reference temperature by 18°C, and the results of each test were favorable.
However, with "Y₂O₃ + 90 mol % SiO₂" in test No. 11, the maximum temperature increased with respect to the reference temperature by 9°C, and the characteristics were lowered when the amount of SiO₂ increased. The level of test No. 11 was in a level that was not able to be used.

**[Table 3]**

| Test Number | Mo composition x (MoxW1-x) Si₂ | Additives | MAX temperature |
|---|---|---|---|
| 1 | 1 | SiO₂ | Reference |
| 7 | 0.65 | Y₂O₃ + 55mol%SiO₂ | 25 |
| 10 | 0.65 | Y₂O₃ + 65mol%SiO₂ | 18 |
| 11 | 0.65 | Y₂O₃ + 90mol%SiO₂ | 9 |

Fig. 2 shows a phase diagram of Y₂O₃ - SiO₂. As the results of the tests and the phase diagram show, in case of addition of Y₂O₃ and SiO₂, it would appear that the additive amount up to 60 mol % SiO₂ were favorable, and the amount of 65 mol % SiO₂ at most. Here, with consideration given to the behavior of Y₂O₃ + SiO₂ under a high temperature, with "Y₂O₃ + 50 mol % SiO₂", for example, Y₂SiO₅ synthesis is performed at 1650°C.
At this time, contraction occurs, which will cause a stress on the heater and affect its life and such a problem needs to be avoided as much as possible, however, the problem can be avoided by way of synthesizing Y₂O₃ and SiO₂ for Y₂SiO₅ in advance.

Y₂SiO₅ synthesis can be performed by mixing Y₂O₃ powder and SiO₂ powder at a molar ratio using Y₂O₃ / (Y₂O₃ + SiO₂) = 40 to 60 (mol %) and performing thermal processing in the atmosphere at 1650°C or more for 10 hours. Since a thermal processing time depends on the grain diameter of the powder, it can be accomplished for less than 10 hours. The results of the maximum temperature of the sintered compact using this method are shown in table 4. Consequently, as shown in test No. 12 in table 4, the maximum temperature increased with respect to the reference temperature (1750°C) by 29°C, which was effective; thus the result as good as those before the synthesis were obtained.
It can be considered that Y₂SiO₅ obtained by synthesizing Y₂O₃ or Y₂O₃ and SiO₂ has an oxidation resistance characteristic and a low evaporation rate under a high temperature as compared with SiO₂, and this protects the surface of the tungsten-containing molybdenum disilicide (MoₓW₁₋ₓ) Si₂ and makes it possible to perform the operation at a high temperature.

**[Table 4]**

| Test Number | Mo composition x (MoₓW₁-ₓ)Si₂ | Additives | MAX temperature |
|---|---|---|---|
| 1 | 1 | SiO₂ | Reference |
| 7 | 0.65 | Y₂O₃ + 55 mol%SiO₂ | 25 |
| 12 | 0.65 | Y₂SiO₅ | 29 |

### [Examples]

Examples will now be described. It should be understood that these examples are intended for facilitating the understanding of the invention, and that the current invention is not limited to the examples below.

### (Example 1)

Y₂O₃ powder at 9.5 vol. % as an additive was added to the raw material powder of the tungsten-containing molybdenum disilicide (MoₓW₁₋ₓ) Si₂, wherein x = 0.65, and pulverization with an attritor was performed to have the grain diameter of 2 µm. A binder was further added, and Henschel (the product name "Henschel mixer": a mixer to mix a raw material by rotating blades in a tank) mixing was performed.

Subsequently, the mixture was extruded into a rod shape, thereafter degreased in a furnace atmosphere of nitrogen and sintered in argon atmosphere at 1500°C. The obtained material was removed from the furnace and thereafter subjected to current flow sintering under the atmosphere. When the maximum heat generation temperature of the thus obtained sample was measured, it increased by 26°C as compared with a conventional molybdenum disilicide heater. Comparison was made with the reference temperature of 1750°C of a conventional molybdenum disilicide heater.

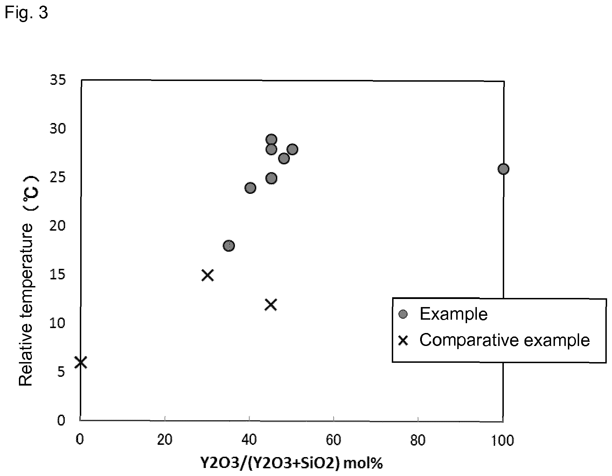

When this sintered compact was analyzed with ICP-OES, the result was Mo = 32.2 wt. %, W = 32.4 wt. % and Y = 5.3 wt. %. The results are shown in table 5. A relationship between a molar ratio of Y₂O₃ to SiO₂ and a relative temperature is shown in Fig. 3. The ICP analyzed results on the sintered compacts in the following examples and comparative examples were as shown in table 5.

### (Example 2)

The mixed powder of Y₂O₃ powder and SiO₂ at 9.5 vol. % was added to the raw material powder of the tungsten-containing molybdenum disilicide (MoₓW₁₋ₓ) Si₂, wherein x = 0.65. The mixing ratio between Y₂O₃ powder and SiO₂ was set using Y₂O₃ : SiO₂ = 45 : 55 mol %. A binder was added to the obtained mixture, and Henschel mixing was performed.

Subsequently, the mixture was extruded into a rod shape, thereafter degreased in a furnace atmosphere of nitrogen and sintered in argon atmosphere at 1500°C. The obtained material was removed from the furnace and thereafter subjected to current flow sintering under the atmosphere. When the maximum heat generation temperature of the thus obtained sample was measured, it increased by 25°C as compared with a conventional molybdenum disilicide heater. The value in this case, as in example 1, was compared with the reference temperature of 1750°C of a conventional molybdenum disilicide heater.
The results are shown in table 5. A relationship between a molar ratio of Y₂O₃ to SiO₂ and a relative temperature is shown in Fig. 3.

### (Example 3)

Y₂SiO₅ powder at 9.5 vol. % was added to the raw material powder of the tungsten-containing molybdenum disilicide (MoₓW₁₋ₓ) Si₂, wherein x = 0.65. Here, Y₂SiO₅ used is made from a raw material by previously mixing Y₂O₃ and SiO₂ at a ratio of 45: 55 (mol %) and synthesizing it at 1650°C or more.
A binder was added to the obtained mixture, and Henschel mixing was performed.

Subsequently, the mixture was extruded into a rod shape, thereafter degreased in a furnace atmosphere of nitrogen and sintered in argon atmosphere at 1500°C. The obtained material was removed from the furnace and thereafter subjected to current flow sintering under the atmosphere. When the maximum heat generation temperature of the thus obtained sample was measured, it increased by 29°C as compared with a conventional molybdenum disilicide heater. The value in this case, as in example 1, was compared with the reference temperature of 1750°C of a conventional molybdenum disilicide heater.
The results are shown in table 5. A relationship between a molar ratio of Y₂O₃ to SiO₂ and a relative temperature is shown in Fig. 3.

### (Example 4)

Y₂O₃ powder and SiO₂ powder at a total of 9.5 vol. % with a mixing ratio using Y₂O₃ : SiO₂ = 35 : 65 mol % was added to the raw material powder of the tungsten-containing molybdenum disilicide (MoₓW₁₋ₓ) Si₂, wherein x = 0.65. A binder was added to the obtained mixture, and Henschel mixing was performed. Subsequently, the mixture was extruded into a rod shape, thereafter degreased in a furnace atmosphere of nitrogen and sintered in argon atmosphere at 1500°C. The obtained material was removed from the furnace and thereafter subjected to current flow sintering under the atmosphere.

When the maximum heat generation temperature of the thus obtained sample was measured, it increased by 18°C as compared with a conventional molybdenum disilicide heater. This is a level that is lower than the other examples, and this is said to be the limit value. The value in this case, as in example 1, was compared with the reference temperature of 1750°C of a conventional molybdenum disilicide heater.
The results are shown in table 5. A relationship between a molar ratio of Y₂O₃ to SiO₂ and a relative temperature is shown in Fig. 3.

### (Example 5)

Y₂SiO₅ powder at 9.5 vol. % was added to the raw material powder of the tungsten-containing molybdenum disilicide (MoₓW₁₋ₓ) Si₂, wherein x = 0.60. Here, Y₂SiO₅ used was made from a raw material by previously mixing Y₂O₃ and SiO₂ at a ratio of 45 : 55 (mol %) and synthesizing it at 1650°C or more.
A binder was added to the obtained mixture, and Henschel mixing was performed.

Subsequently, the mixture was extruded into a rod shape, thereafter degreased in a furnace atmosphere of nitrogen and sintered in argon atmosphere at 1500°C. The obtained material was removed from the furnace and thereafter subjected to current flow sintering under the atmosphere. When the maximum heat generation temperature of the thus obtained sample was measured, it increased by 28°C as compared with a conventional molybdenum disilicide heater. The value in this case, as in example 1, was compared with the reference temperature of 1750°C of a conventional molybdenum disilicide heater.
The results are shown in table 5. A relationship between a molar ratio of Y₂O₃ to SiO₂ and a relative temperature is shown in Fig. 3.

### (Example 6)

Y₂SiO₅ powder at 9.5 vol. % was added to the raw material powder of the tungsten-containing molybdenum disilicide (MoₓW₁₋ₓ) Si₂, wherein x = 0.70. Here, Y₂SiO₅ used was made from a raw material by previously mixing Y₂O₃ and SiO₂ at a ratio of 45 : 55 (mol %) and synthesizing it at 1650°C or more. A binder was added to the obtained mixture, and Henschel mixing was performed.

Subsequently, the mixture was extruded into a rod shape, thereafter degreased in a furnace atmosphere of nitrogen and sintered in argon atmosphere at 1500°C. The obtained material was removed from the furnace and thereafter subjected to current flow sintering under the atmosphere. When the maximum heat generation temperature of the thus obtained sample was measured, it increased by 26°C as compared with a conventional molybdenum disilicide heater. The value in this case, as in example 1, was compared with the reference temperature of 1750°C of a conventional molybdenum disilicide heater.

### (Example 7)

Y₂SiO₅ powder at 8 vol. % was added to the raw material powder of the tungsten-containing molybdenum disilicide (MoₓW₁₋ₓ) Si₂, wherein x = 0.65. Here, Y₂SiO₅ used was made from a raw material by previously mixing Y₂O₃ and SiO₂ at a ratio of 40 : 60 (mol %) and synthesizing it at 1650°C or more. A binder was added to the obtained mixture, and Henschel mixing was performed.

Subsequently, the mixture was extruded into a rod shape, thereafter degreased in a furnace atmosphere of nitrogen and sintered in argon atmosphere at 1500°C. The obtained material was removed from the furnace and thereafter subjected to current flow sintering under the atmosphere. When the maximum heat generation temperature of the thus obtained sample was measured, it increased by 24°C as compared with a conventional molybdenum disilicide heater. The value in this case, as in example 1, was compared with the reference temperature of 1750°C of a conventional molybdenum disilicide heater.

### (Example 8)

Y₂SiO₅ powder at 12 vol. % was added to the raw material powder of the tungsten-containing molybdenum disilicide (MoₓW₁₋ₓ) Si₂, wherein x = 0.65. Here, Y₂SiO₅ used was made from a raw material by previously mixing Y₂O₃ and SiO₂ at a ratio of 50 : 50 (mol %) and synthesizing it at 1650°C or more. A binder was added to the obtained mixture, and Henschel mixing was performed.

Subsequently, the mixture was extruded into a rod shape, thereafter degreased in a furnace atmosphere of nitrogen and sintered in argon atmosphere at 1500°C. The obtained material was removed from the furnace and thereafter subjected to current flow sintering under the atmosphere. When the maximum heat generation temperature of the thus obtained sample was measured, it increased by 28°C as compared with a conventional molybdenum disilicide heater. The value in this case, as in example 1, was compared with the reference temperature of 1750°C of a conventional molybdenum disilicide heater.
The results are shown in table 5. A relationship between a molar ratio of Y₂O₃ to SiO₂ and a relative temperature is shown in Fig. 3.

### (Example 9)

Y₂SiO₅ powder at 10 vol. % was added to the raw material powder of the tungsten-containing molybdenum disilicide (MoₓW₁₋ₓ) Si₂, wherein x = 0.65. Here, Y₂SiO₅ used was made from a raw material by previously mixing Y₂O₃ and SiO₂ at a ratio of 48: 52 (mol %) and synthesizing it at 1650°C or more. A binder was added to the obtained mixture, and Henschel mixing was performed.

Subsequently, the mixture was extruded into a rod shape, thereafter degreased in a furnace atmosphere of nitrogen and sintered in argon atmosphere at 1600°C. The obtained material was removed from the furnace and thereafter subjected to current flow sintering under the atmosphere. When the maximum heat generation temperature of the thus obtained sample was measured, it increased by 27°C as compared with a conventional molybdenum disilicide heater. The value in this case, as in example 1, was compared with the reference temperature of 1750°C of a conventional molybdenum disilicide heater.
The results are shown in table 5. A relationship between a molar ratio of Y₂O₃ to SiO₂ and a relative temperature is shown in Fig. 3.

### (Comparative Example 1)

SiO₂ powder at 9.5 vol. % was added to the raw material powder of the tungsten-containing molybdenum disilicide (MoₓW₁₋ₓ) Si₂, wherein x = 0.65. A binder was added to the obtained mixture, and Henschel mixing was performed. Subsequently, the mixture was extruded into a rod shape, thereafter degreased in a furnace atmosphere of nitrogen and sintered in argon atmosphere at 1500°C. The obtained material was removed from the furnace and thereafter subjected to current flow sintering under the atmosphere.

When the maximum heat generation temperature of the thus obtained sample was measured, it increased only by 6°C as compared with a conventional molybdenum disilicide heater. This result was not sufficient compared with that of the present invention. The value in this case, as in example 1, was compared with the reference temperature of 1750°C of a conventional molybdenum disilicide heater. The results are shown in table 5. A relationship between a molar ratio of Y₂O₃ to SiO₂ and a relative temperature is shown in Fig. 3.

### (Comparative Example 2)

Y₂O₃ powder and SiO₂ powder at a total of 9.5 vol. % with a mixing ratio using Y₂O₃ : SiO₂ = 30 : 70 mol % was added to the raw material powder of the tungsten-containing molybdenum disilicide (MoₓW₁₋ₓ) Si₂, wherein x = 0.65. A binder was added to the obtained mixture, and Henschel mixing was performed. Subsequently, the mixture was extruded into a rod shape, thereafter degreased in a furnace atmosphere of nitrogen and sintered in argon atmosphere at 1500°C.

The obtained material was removed from the furnace and thereafter subjected to current flow sintering under the atmosphere. When the maximum heat generation temperature of the thus obtained sample was measured, it increased by 15°C as compared with a conventional molybdenum disilicide heater.
This result was not sufficient compared with those of the examples of the present invention. The value in this case, as in example 1, was compared with the reference temperature of 1750°C of a conventional molybdenum disilicide heater.

### (Comparative Example 3)

Y₂SiO₅ powder at 9.5 vol. % was added to the raw material powder of the tungsten-containing molybdenum disilicide (MoₓW₁₋ₓ) Si₂, wherein x = 0.8. Here, Y₂SiO₅ used was made from a raw material by previously mixing Y₂O₃ and SiO₂ at a ratio of 45 : 55 mol % and synthesizing it at 1650°C or more. A binder was added to the obtained mixture, and Henschel mixing was performed.

Subsequently, this mixture was extruded into a rod shape, thereafter degreased in a furnace atmosphere of nitrogen and sintered in argon atmosphere at 1500°C. The obtained material was removed from the furnace and thereafter subjected to current flow sintering under the atmosphere. When the maximum heat generation temperature of the thus obtained sample was measured, it increased by 12°C as compared with a conventional molybdenum disilicide heater. The value in this case, as in example 1, was compared with the reference temperature of 1750°C of a conventional molybdenum disilicide heater.
The results are shown in table 5. A relationship between a molar ratio of Y₂O₃ to SiO₂ and a relative temperature is shown in Fig. 3.

As the foregoing results of a series of examples and comparative examples shown in table 5 and Fig. 3, and as is clear from the comparison thereof, such effects were confirmed that the heating element (heater) has an oxidation resistance characteristic and a low evaporation rate, can be operated at a high temperature, even at a high temperature of 1800 to 1900°C, by adding Y₂O₃ to the tungsten-containing molybdenum disilicide (MoₓW₁₋ₓ) Si₂, wherein x = 0.6 to 0.7; further adding a mixture of Y₂O₃ and SiO₂ at predetermined amount, and the synthesized Y₂SiO₅ powder.

**[Table 5]**

| | (MoxW1-x) Si₂ X | Additives vol% | Y₂O₃ : SiO₂ mol% | Temperature Difference to the Reference °C | amount of Y wt% | Remarks |
|---|---|---|---|---|---|---|
| Example 1 | 0.65 | 9.5 | 100:0 | 26 | 5.2 | |
| Example 2 | 0.65 | 9.5 | 45:55 | 25 | 3.2 | |
| Example 3 | 0.65 | 9.5 | 45:55 | 29 | 3.6 | Y₂O₃ and SiO₃ synthesized in advance |
| Example 4 | 0.65 | 9.5 | 35:65 | 18 | 4.1 | |
| Example 5 | 0.6 | 9.5 | 45:55 | 28 | 3.6 | Y₂O₃ and SiO₃ synthesized in advance |
| Example 6 | 0.7 | 9.5 | 45:55 | 25 | 3.6 | Y₂O₃ and SiO₃ synthesized in advance |
| Example 7 | 0.65 | 8 | 40:60 | 24 | 3 | Y₂O₃ and SiO₃ synthesized in advance |
| Example 8 | 0.65 | 12 | 50:50 | 28 | 4.6 | Y₂O₃ and SiO₃ synthesized in advance |
| Example 9 | 0.65 | 10 | 48:52 | 27 | 3.9 | Y₂O₃ and SiO₃ synthesized in advance |
| Comparative Example 1 | 0.65 | 9.5 | 0:100 | 6 | 0 | |
| Comparative Example 2 | 0.65 | 9.5 | 30:70 | 15 | 2.3 | |
| Comparative Example 3 | 0.8 | 9.5 | 45:55 | 12 | 3.6 | Y₂O₃ and SiO₃ synthesized in advance |

### INDUSTRIAL APPLICABILITY

The present invention is able to provide a tungsten-containing molybdenum disilicide heater that has an excellent oxidation resistance characteristic and a low evaporation rate and that can be used at a temperature higher than the conventional molybdenum disilicide heater, and is useful as a heating element (heater) that can be more stable at a high temperature as compared with a conventional heater.

## Claims

1. A tungsten molybdenum disilicide heater, wherein tungsten molybdenum disilicide is represented by composition formula: (MoₓW₁₋ₓ) Si₂, wherein x = 0.6 to 0.7, further containing an yttrium oxide or an yttrium silicate, wherein 4.3 to 6.6 wt. % of the yttrium oxide or the yttrium silicate is contained as an analytical value of yttrium.

2. The tungsten molybdenum disilicide heater of claim 1, containing an yttrium oxide and a silicon oxide, wherein 4.3 to 6.6 wt. % of the yttrium oxide is contained as an analytical value of yttrium.

3. A method of manufacturing a tungsten-containing molybdenum disilicide heater in accordance with claim 1 or 2, wherein an yttrium oxide (Y₂O₃) is added to a raw material powder of a tungsten-containing molybdenum disilicide represented by a composition formula: (MoₓW₁₋ₓ) Si₂, wherein x = 0.6 to 0.7 and wherein the yttrium oxide (Y₂O₃) powder is added at 8 to 12 vol. %;
pulverizing and mixing are performed to form a mixture thereof; and thereafter current flow sintering is performed in the atmosphere.

4. A method of manufacturing a tungsten-containing molybdenum disilicide heater in accordance with claim 1 or 2, wherein a mixture of an yttrium oxide (Y₂O₃) powder and a silicon oxide (SiO₂) powder is added to a raw material powder of a tungsten-containing molybdenum disilicide represented by a composition formula: (MoₓW₁₋ₓ) Si₂, wherein x = 0.6 to 0.7 and wherein the mixture of the yttrium oxide (Y₂O₃) and the silicon oxide (SiO₂) is added at 8 to 12 vol. % as an additive and a ratio of the yttrium oxide (Y₂O₃) in the additive is 35 mol % or more;
pulverizing and mixing are performed to form a mixture thereof; and thereafter current flow sintering is performed in the atmosphere.

5. A method of manufacturing a tungsten-containing molybdenum disilicide heater in accordance with claim 1 or 2, wherein an yttrium silicate (Y₂SiO₅) powder is added to a raw material powder of a tungsten-containing molybdenum disilicide represented by a composition formula: (MoₓW₁₋ₓ) Si₂, wherein x = 0.6 to 0.7 and wherein the Y₂SiO₅ is added at 8 to 12 vol. % and is synthesized by mixing an yttrium oxide (Y₂O₃) and a silicon oxide (SiO₂) using Y₂O₃ / (Y₂O₃ + SiO₂) = 40 to 60 mol %, and heating the mixture at 1650°C or more;
pulverizing and mixing are performed to form a mixture thereof; and thereafter current flow sintering is performed in the atmosphere.

6. The method of any of claims 3 to 5, further comprising:
degreasing in an atmosphere of N₂ and thereafter primary sintering in an atmosphere of Ar at 1450 to 1550°C or more, before the current flow sintering is performed.

## Patentansprüche

1. Wolfram-Molybdän-Disilizid-Heizelement, worin Wolfram-Molybdän-Disilizid durch die Zusammensetzungsformel (MoₓW₁₋ₓ) Si₂ dargestellt ist, worin x = 0,6 bis 0,7, ferner beinhaltend ein Yttriumoxid oder ein Yttriumsilikat, worin 4,3 bis 6,6 Gew.-% des Yttriumoxids oder des Yttriumsilikats als ein analytischer Wert von Yttrium enthalten sind.

2. Wolfram-Molybdän-Disilizid-Heizelement nach Anspruch 1, enthaltend ein Yttriumoxid und ein Siliziumoxid, worin 4,3 bis 6,6 Gew.-% des Yttriumoxids als ein analytischer Wert von Yttrium enthalten sind.

3. Verfahren zur Herstellung eines wolframhaltigen Molybdän-Disilizid-Heizelements nach Anspruch 1 oder 2, worin ein Yttriumoxid (Y₂O₃) zu einem Rohstoffpulver eines wolframhaltigen Molybdän-Disilizids zugesetzt wird, das durch eine Zusammensetzungsformel (MoₓW₁₋ₓ) Si₂ dargestellt ist, worin x = 0,6 bis 0,7 und worin das Yttriumoxid(Y₂O₃)-Pulver mit 8 bis 12 Vol.-% zugesetzt wird;
Pulverisieren und Mischen durchgeführt werden, um eine Mischung davon zu bilden; und danach Stromfluss-Sintern in der Atmosphäre durchgeführt wird.

4. Verfahren zur Herstellung eines wolframhaltigen Molybdän-Disilizid-Heizelements nach Anspruch 1 oder 2, worin eine Mischung eines Yttriumoxid(Y₂O₃)-Pulvers und eines Siliziumoxid(SiO₂)-Pulvers zu einem Rohstoffpulver eines wolframhaltigen Molybdän-Disilizids zugesetzt wird, das durch eine Zusammensetzungsformel (MoₓW₁₋ₓ) Si₂ dargestellt ist, worin x = 0,6 bis 0,7 und worin die Mischung des Yttriumoxids (Y₂O₃) und des Siliziumoxids (SiO₂) mit 8 bis 12 Vol.-% als ein Additiv zugesetzt wird und ein Anteil des Yttriumoxids (Y₂O₃) in dem Additiv 35 Mol-.% oder mehr beträgt;
Pulverisieren und Mischen durchgeführt werden, um eine Mischung davon zu bilden; und danach Stromfluss-Sintern in der Atmosphäre durchgeführt wird.

5. Verfahren zur Herstellung eines wolframhaltigen Molybdän-Disilizid-Heizelements nach Anspruch 1 oder 2, worin ein Yttriumsilikat(Y₂SiO₅)-Pulver zu einem Rohstoffpulver eines wolframhaltigen Molybdän-Disilizids zugesetzt wird, das durch eine Zusammensetzungsformel (MoₓW₁₋ₓ) Si₂ dargestellt ist, worin x = 0,6 bis 0,7 und worin das Y₂SiO₅ mit 8 bis 12 Vol.-% zugesetzt wird und durch Mischen eines Yttriumoxids (Y₂O₃) und eines Siliziumoxids (SiO₂) unter Verwendung von Y₂O₃ / (Y₂O₃ + SiO₂) = 40 bis 60 Mol.-%, und Erhitzen der Mischung bei 1650 °C oder mehr, synthetisiert wird;
Pulverisieren und Mischen durchgeführt werden, um eine Mischung davon zu bilden; und danach Stromfluss-Sintern in der Atmosphäre durchgeführt wird.

6. Verfahren nach einem der Ansprüche 3 bis 5, ferner umfassend:
Entfetten in einer Atmosphäre von N₂ und danach primäres Sintern in einer Atmosphäre von Ar bei 1450 bis 1550 °C oder mehr, bevor das Stromfluss-Sintern durchgeführt wird.

## Revendications

1. Élément de chauffage en disiliciure de molybdène tungstène, dans lequel le disiliciure de molybdène tungstène est représenté par la formule de composition : (MoₓW₁₋ₓ) Si₂, dans lequel x = 0,6 à 0,7, contenant en outre un oxyde d'yttrium ou un silicate d'yttrium, dans lequel un pourcentage de 4,3 à 6,6 % en poids de l'oxyde d'yttrium ou du silicate d'yttrium est contenu en tant que valeur analytique de l'yttrium.

2. Élément de chauffage en disiliciure de molybdène tungstène selon la revendication 1, contenant un oxyde d'yttrium et un oxyde de silicium, dans lequel un pourcentage de 4,3 à 6,6 % en poids de l'oxyde d'yttrium est contenu en tant que valeur analytique de l'yttrium.

3. Procédé de production d'un élément de chauffage en disiliciure de molybdène contenant du tungstène selon la revendication 1 ou 2, dans lequel un oxyde d'yttrium (Y₂O₃) est ajouté à une poudre de matériau brut d'un disiliciure de molybdène contenant du tungstène représenté par une formule de composition : (MoₓW₁₋ₓ) Si₂, dans lequel x = 0,6 à 0,7 et dans lequel la poudre d'oxyde d'yttrium (Y₂O₃) est ajoutée à raison de 8 à 12 % en volume ;
la pulvérisation et le mélange sont effectués pour en former un mélange ; et ensuite
le frittage du flux de courant est effectué dans l'atmosphère.

4. Procédé de production d'un élément de chauffage en disiliciure de molybdène contenant du tungstène selon la revendication 1 ou 2, dans lequel un mélange d'une poudre d'oxyde d'yttrium (Y₂O₃) et d'une poudre d'oxyde de silicium (SiO₂) est ajouté à une poudre de matériau brut d'un disiliciure de molybdène contenant du tungstène représenté par une formule de composition : (MoₓW₁₋ₓ) Si₂, dans lequel x = 0,6 à 0,7 et dans lequel le mélange de l'oxyde d'yttrium (Y₂O₃) et de l'oxyde de silicium (SiO₂) est ajouté à raison de 8 à 12 % en volume en tant qu'additif et le rapport de l'oxyde d'yttrium (Y₂O₃) dans l'additif est égal ou supérieur à 35 % en moles ;
la pulvérisation et le mélange sont effectués pour en former un mélange ; et ensuite
le frittage du flux de courant est effectué dans l'atmosphère.

5. Procédé de production d'un élément de chauffage en disiliciure de molybdène contenant du tungstène selon la revendication 1 ou 2, dans lequel une poudre de silicate d'yttrium (Y₂SiO₅) est ajoutée à une poudre de matériau brut d'un disiliciure de molybdène contenant du tungstène représenté par une formule de composition : (MoₓW₁₋ₓ) Si₂, dans lequel x = 0,6 à 0,7 et dans lequel le Y₂SiO₅ est ajouté à raison de 8 à 12 % en volume et est synthétisé en mélangeant un oxyde d'yttrium (Y₂O₃) et un oxyde de silicium (SiO₂) en utilisant Y₂O₃ / (Y₂O₃ + SiO₂) = 40 à 60 % en moles et en chauffant le mélange à 1650°C ou plus ;
la pulvérisation et le mélange sont effectués pour en former un mélange ; et ensuite
le frittage du flux de courant est effectué dans l'atmosphère.

6. Procédé selon l'une quelconque des revendications 3 à 5, comprenant en outre :
le dégraissage dans une atmosphère de N₂ et ensuite
le frittage primaire dans une atmosphère de Ar entre 1450 et 1550°C ou plus, avant que le frittage du flux de courant ne soit effectué.
